# EUROPEAN PATENT APPLICATION

(11) **EP 4 654 669 A1**
(43) Date of publication of application: **26.11.2025**
(21) Application number: 23924925.3
(22) Date of filing: 27.09.2023
(51) Int. Cl.: H04W 48/08

(54) **WIRELESS NETWORK ACCESS METHOD, RELATED DEVICES, AND WIRELESS NETWORK**

(30) Priority: 28.02.2023 CN 202310234411
(71) Applicant: Huawei Technologies Co., Ltd., Shenzhen, Guangdong 518129 (CN)
(72) Inventor: GAN, Shuang, Shenzhen, Guangdong 518129 (CN); WANG, Zhimin, Shenzhen, Guangdong 518129 (CN); ZHANG, Wen, Shenzhen, Guangdong 518129 (CN)
(74) Representative: Pfenning, Meinig & Partner mbB
(86) International application number: PCT/CN2023/121982
(87) International publication number: WO 2024/178971

(57) **Abstract**

Embodiments of this application disclose a wireless network access method, a related device, and a wireless network, to ensure relatively high signal strength of a radio link between a terminal device and an accessed access device in a radio link setup process, thereby ensuring communication quality between the terminal device and the accessed access device. The method in embodiments of this application includes: A first communication device receives a permission indication frame from a second communication device. The permission indication frame indicates that the first communication device has permission to send an access message to a terminal device, and the access message is used by the terminal device to access the first communication device. The first communication device sends the access message to the terminal device based on the permission indication frame.

## Description

This application claims priority to Chinese Patent Application No. CN2023 10234411.6, filed with the China National Intellectual Property Administration on February 28, 2023 and entitled "WIRELESS NETWORK ACCESS METHOD, RELATED DEVICE, AND WIRELESS NETWORK", which is incorporated herein by reference in its entirety.

### TECHNICAL FIELD

This application relates to the communication field, and in particular, to a wireless network access method, a related device, and a wireless network.

### BACKGROUND

In an existing wireless network communication technology (wireless fidelity, Wi-Fi) network, a plurality of access nodes (access point, AP) are cascaded for networking to improve signal coverage. Networking modes are classified into networking with a same basic service set identifier (basic service set identifier, BSSID) and networking with different BSSIDs. The networking with a same BSSID means that all APs in a same network have a same BSSID. The networking with different BSSIDs means that different APs in a same network have different BSSIDs.

After a radio link setup process is performed between a terminal device (Station, STA) and an AP, the STA can communicate with the AP. The radio link setup process includes a detection process, an authentication process, an association process, a key exchange process, and the like.

However, when a plurality of APs are cascaded for networking, in the radio link setup process, a plurality of APs may communicate with the STA. If the STA accesses an AP at a long distance, signal strength of a radio link between the STA and the accessed AP is low. Consequently, communication quality between the STA and the accessed AP is poor.

### SUMMARY

Embodiments of this application provide a wireless network access method, a related device, and a wireless network, to ensure relatively high signal strength of a radio link between a terminal device and an accessed access device in a radio link setup process, thereby ensuring communication quality between the terminal device and the accessed access device.

A first aspect of this application provides a wireless network access method. The method includes: A first communication device receives a permission indication frame from a second communication device. The permission indication frame indicates that the first communication device has permission to send an access message to a terminal device, and the access message is used by the terminal device to access the first communication device. The first communication device sends the access message to the terminal device based on the permission indication frame.

In this aspect, only a first communication device having relatively high signal strength to a terminal device has permission to send an access message to the terminal device. This effectively ensures signal strength between the terminal device and the accessed first communication device, and prevents the terminal device from accessing a communication device with low signal strength.

Based on the first aspect, in an optional implementation, before the first communication device receives the permission indication frame from the second communication device, the method further includes: The first communication device sends a request indication frame to the second communication device. The request indication frame carries a first strength indication message, an identifier of the first communication device, and an address of the terminal device, the first strength indication message indicates signal strength between the first communication device and the terminal device, and the first strength indication message is used by the second communication device to determine whether the first communication device has permission to send the access message to the terminal device.

In this implementation, the first communication device requests to obtain permission to send the access message to the terminal device. Therefore, the first communication device sends the permission indication frame to the second communication device, to request the second communication device to determine whether the first communication device has permission to send the access message to the terminal device. This ensures signal strength between the terminal device and an accessed communication device.

Based on the first aspect, in an optional implementation, the access message includes a probe response frame, and that the first communication device sends the access message to the terminal device based on the permission indication frame includes: The first communication device sends the probe response frame to the terminal device based on the permission indication frame. The probe response frame carries a basic service set identifier BSSID of the first communication device, and the probe response frame is used by the terminal device to successfully detect the first communication device.

In this implementation, communication quality between the terminal device and the detected first communication device is ensured, and a disadvantage that the terminal device accesses another unknown wireless network due to excessively low signal strength detected by the terminal device is avoided, thereby improving network security.

Based on the first aspect, in an optional implementation, before the first communication device sends the request indication frame to the second communication device, the method further includes: The first communication device receives a probe request frame from the terminal device. The probe request frame is used by the terminal device to request to detect the first communication device. The first communication device obtains the request indication frame based on the probe request frame.

In this implementation, when obtaining the probe request frame, the first communication device sends the request indication frame to the second communication device. This ensures communication quality between the terminal device and the detected first communication device.

Based on the first aspect, in an optional implementation, the access message includes an authentication response frame, and that the first communication device sends the access message to the terminal device based on the permission indication frame includes: The first communication device sends the authentication response frame to the terminal device based on the permission indication frame. The authentication response frame carries the BSSID of the first communication device, and the authentication response frame indicates that the terminal device succeeds in link authentication.

In this implementation, in a wireless network, only link authentication between the first communication device and the terminal device succeeds. In addition, the first communication device is a communication device that has highest signal strength to the terminal device in the wireless network. This ensures that the terminal device can succeed in link authentication to the first communication device with optimal communication quality, and avoids a disadvantage that the terminal device fails in link authentication due to link authentication between the terminal device and a communication device with excessively low signal strength.

Based on the first aspect, in an optional implementation, before the first communication device sends the request indication frame to the second communication device, the method further includes: The first communication device receives an authentication request frame from the terminal device. The authentication request frame is used to request to perform link authentication on the terminal device. The first communication device obtains the request indication frame based on the authentication request frame.

In this implementation, the first communication device requests, from the second communication device based on the authentication request frame from the terminal device, permission to send the authentication response frame. This ensures that the terminal device can succeed in link authentication to the first communication device with optimal communication quality.

Based on the first aspect, in an optional implementation, the access message includes an association response frame, and that the first communication device sends the access message to the terminal device based on the permission indication frame includes: The first communication device sends the association response frame to the terminal device based on the permission indication frame. The association response frame carries the BSSID of the first communication device, and the association response frame indicates that the terminal device has been successfully associated with the first communication device.

In this implementation, in the wireless network, only association between the first communication device and the terminal device succeeds. In addition, the first communication device is a communication device that has highest signal strength to the terminal device in the wireless network. This ensures that the terminal device can be successfully associated with the first communication device with optimal communication quality, and avoids a disadvantage that the terminal device fails in association because the terminal device is associated with a communication device with excessively low signal strength.

Based on the first aspect, in an optional implementation, before the first communication device sends the request indication frame to the second communication device, the method further includes: The first communication device receives an association request frame from the terminal device. The association request frame is used by the terminal device to request to be associated with the first communication device. The first communication device obtains the request indication frame based on the association request frame.

In this implementation, the first communication device requests, from the second communication device based on the association request frame from the terminal device, permission to send the association response frame. This ensures that the terminal device can be successfully associated with the first communication device with optimal communication quality.

Based on the first aspect, in an optional implementation, the permission indication frame includes a correspondence between the address of the terminal device and a target BSSID, and that the first communication device sends the access message to the terminal device based on the permission indication frame includes: If the first communication device determines that the BSSID of the first communication device is the same as the target BSSID, the first communication device sends the access message to the terminal device based on the address of the terminal device.

In this implementation, only when the first communication device determines that the BSSID of the first communication device is the same as the target BSSID, the first communication device sends the access message to the terminal device. This ensures that the terminal device accesses the first communication device with high signal strength.

A second aspect of this application provides a wireless network access method. The method includes: A second communication device obtains a first strength indication message. The first strength indication message indicates signal strength between a first communication device and a terminal device. The second communication device sends a permission indication frame to the first communication device based on the first strength indication message. The permission indication frame indicates that the first communication device has permission to send an access message to the terminal device, and the access message is used by the terminal device to access the first communication device.

For descriptions of advantageous effects of this aspect, refer to the first aspect. Details are not described again.

Based on the second aspect, in an optional implementation, that the second communication device sends a permission indication frame to the first communication device based on the first strength indication message includes: The second communication device obtains a third strength indication message. The third strength indication message indicates signal strength between a third communication device and the terminal device. The second communication device determines that the signal strength indicated by the first strength indication message is greater than the signal strength indicated by the third strength indication message.

Based on the second aspect, in an optional implementation, that a second communication device obtains a first strength indication message includes: The second communication device receives a request indication frame from the first communication device. The request indication frame carries the first strength indication message, an identifier of the first communication device, and an address of the terminal device.

Based on the second aspect, in an optional implementation, that a second communication device obtains a first strength indication message includes: The second communication device receives a measurement response frame from the terminal device. The measurement response frame is used to obtain the first strength indication message.

Based on the second aspect, in an optional implementation, the permission indication frame includes a correspondence between an address of the terminal device and a target basic service set identifier BSSID, and the target BSSID is used to indicate that the first communication device having the target BSSID has permission to send the access message to the terminal device.

A third aspect of this application provides a wireless network access method. The method includes: A second communication device obtains a first strength indication message and a second strength indication message. The first strength indication message indicates signal strength between a first communication device and a terminal device, and the second strength indication message indicates signal strength between the second communication device and the terminal device. The second communication device determines that the signal strength indicated by the second strength indication message is greater than the signal strength indicated by the first strength indication message, and sends an access message to the terminal device. The access message is used by the terminal device to access the second communication device.

In this aspect, only a second communication device having relatively high signal strength to a terminal device has permission to send an access message to the terminal device. This effectively ensures signal strength between the terminal device and the accessed second communication device, and prevents the terminal device from accessing a communication device with low signal strength.

Based on the third aspect, in an optional implementation, that a second communication device obtains a first strength indication message includes: The second communication device receives a request indication frame from the first communication device. The request indication frame carries the first strength indication message, an identifier of the first communication device, and an address of the terminal device.

Based on the third aspect, in an optional implementation, that a second communication device obtains a first strength indication message and a second strength indication message includes: The second communication device receives a measurement response frame from the terminal device. The measurement response frame is used to obtain the first strength indication message and the second strength indication message.

A fourth aspect of this application provides a wireless network access method. The method includes: A second communication device obtains a first strength indication message. The first strength indication message indicates signal strength between a first communication device and a terminal device. The second communication device sends a permission indication frame to the first communication device based on the first strength indication message. The permission indication frame indicates that the first communication device has permission to send an access message to the terminal device, and the access message is used by the terminal device to access the first communication device. The first communication device sends the access message to the terminal device.

For descriptions of advantageous effects of this aspect, refer to the first aspect. Details are not described again.

A fifth aspect of this application provides a communication device. The communication device includes a processor and a transceiver connected to the processor. The transceiver is configured to receive a permission indication frame from another communication device. The processor is configured to determine, based on the permission indication frame, that the communication device has permission to send an access message to a terminal device. The access message is used by the terminal device to access the communication device. The transceiver is further configured to send the access message to the terminal device.

For descriptions of advantageous effects of this aspect, refer to the first aspect. Details are not described again.

A sixth aspect of this application provides a communication device. The communication device includes a processor and a transceiver connected to the processor. The processor is configured to obtain a first strength indication message. The first strength indication message indicates signal strength between another communication device and a terminal device. The transceiver is configured to send a permission indication frame to the another communication device based on the first strength indication message. The permission indication frame indicates that the another communication device has permission to send an access message to the terminal device, and the access message is used by the terminal device to access the another communication device.

For descriptions of advantageous effects of this aspect, refer to the first aspect. Details are not described again.

A seventh aspect of this application provides a communication device. The communication device includes a processor and a transceiver connected to the processor. The processor is configured to: obtain a first strength indication message and a second strength indication message, where the first strength indication message indicates signal strength between another communication device and a terminal device, and the second strength indication message indicates signal strength between the communication device and the terminal device; and determine that the signal strength indicated by the second strength indication message is greater than the signal strength indicated by the first strength indication message. The transceiver is configured to send an access message to the terminal device. The access message is used by the terminal device to access the communication device.

For descriptions of advantageous effects of this aspect, refer to the first aspect. Details are not described again.

An eighth aspect of this application provides a wireless network. The wireless network includes a first communication device, a second communication device, and a terminal device. The second communication device is configured to obtain a first strength indication message. The first strength indication message indicates signal strength between the first communication device and the terminal device. The second communication device is configured to send a permission indication frame to the first communication device based on the first strength indication message. The permission indication frame indicates that the first communication device has permission to send an access message to the terminal device, and the access message is used by the terminal device to access the first communication device. The first communication device is configured to send the access message to the terminal device.

For descriptions of advantageous effects of this aspect, refer to the first aspect. Details are not described again.

A ninth aspect of this application provides a computer-readable storage medium. The computer storage medium stores a computer program, the computer program includes program instructions, and when the program instructions are executed by a processor, the processor is enabled to perform the method according to any one of the first aspect to the fourth aspect.

### BRIEF DESCRIPTION OF DRAWINGS

FIG. 1 is a schematic diagram of a structure of a wireless network;
FIG. 2 is an example diagram of a detection process of a wireless network according to an existing solution;
FIG. 3 is a flowchart of steps of a first embodiment of a wireless network access method according to this application;
FIG. 4 is an example diagram of a first frame structure of a request indication frame according to this application;
FIG. 5 is an example diagram of a frame structure of a permission indication frame according to this application;
FIG. 6 is an example diagram of a frame structure of an OMCI frame according to this application;
FIG. 7 is a flowchart of steps of a second embodiment of a wireless network access method according to this application;
FIG. 8 is a flowchart of steps of a third embodiment of a wireless network access method according to this application;
FIG. 9 is an example diagram of a second frame structure of a request indication frame according to this application;
FIG. 10 is a flowchart of an access method according to an existing solution;
FIG. 11 is a flowchart of steps of a fourth embodiment of a wireless network access method according to this application;
FIG. 12 is an example diagram of another frame structure of a permission indication frame according to this application;
FIG. 13 is an example diagram of a structure of a first embodiment of a communication device according to this application; and
FIG. 14 is an example diagram of a structure of a second embodiment of a communication device according to this application.

### DESCRIPTION OF EMBODIMENTS

The following clearly and completely describes technical solutions in embodiments of the present invention with reference to accompanying drawings in embodiments of the present invention. It is clear that the described embodiments are merely some rather than all of embodiments of the present invention. All other embodiments obtained by persons skilled in the art based on embodiments of the present invention without creative efforts shall fall within the protection scope of the present invention.

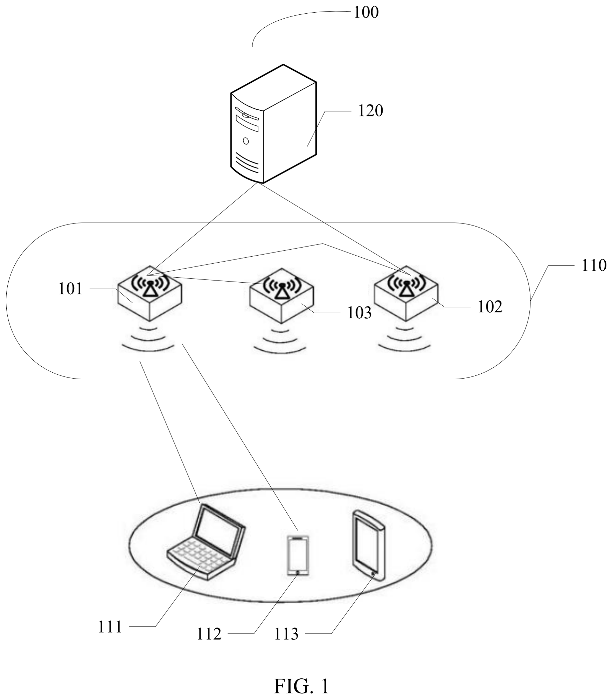

To better understand a wireless network access method provided in this application, a structure of a wireless network 100 provided in this application is first described with reference to FIG. 1. FIG. 1 is an example diagram of a structure of the wireless network.

The wireless network 100 shown in FIG. 1 includes a plurality of access devices, for example, a first access device 101, a second access device 102, and a third access device 103 shown in FIG. 1. As shown in FIG. 1, an example in which the wireless network 100 includes three access devices is used for description. In another example, the wireless network may include any quantity of access devices. The first access device 101 is used as an example. The first access device 101 may be an AP in a wireless local area network (wireless local area network, WLAN), or a network device in a 5th generation mobile communication technology (5th generation mobile communication technology, 5G) network. For example, the network device may be a transmission reception point (transmission reception point, TRP), a base station, or a small cell device. This is not limited in this application.

The wireless network 100 may further include at least one terminal device, for example, a terminal device 111 and a terminal device 112 shown in FIG. 1 that are connected to the first access device 101. In this example, a quantity of terminal devices connected to each access device is described as an optional example, and is not limited. The terminal device 111 is used as an example. The first access device 101 communicates with the terminal device 111 via a wireless air interface. The terminal device 111 may be referred to as a STA, an access terminal, user equipment, a subscriber unit, a subscriber station, a mobile station, a mobile console, a remote station, a remote terminal, a mobile device, a user terminal, a terminal, a wireless communication device, a user agent, a user apparatus, or the like. This is not specifically limited in this application. A device type of the terminal device 111 may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an in-vehicle device, a wearable device, user equipment in a 5G network, or the like.

For example, if the wireless network 100 described in this example is applied to a fiber to the room (fiber to the room, FTTR) scenario, the plurality of access devices included in the wireless network 100 are distributed in rooms, so that a wireless signal covers each room in a home scenario.

The wireless network 100 described in this example further includes an access controller (access controller, AC) 120. A main function of the access controller 120 is to manage and control a connected access device. The access controller 120 shown in FIG. 1 is connected to the first access device 101, the second access device 102, and the third access device 103. The access controller 120 is configured to manage and control the first access device 101, the second access device 102, and the third access device 103.

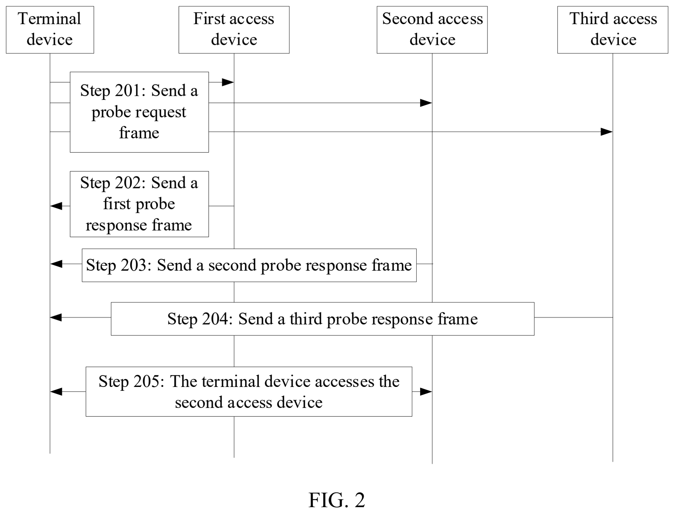

In the example shown in FIG. 1, for example, the wireless network is in networking with a same BSSID. In this case, a BSSID of the first access device 101, a BSSID of the second access device 102, and a BSSID of the third access device 103 are the same and all are a target BSSID. A technical disadvantage of an existing solution that a terminal device detects an access device based on networking with a same BSSID is described with reference to FIG. 2. FIG. 2 is an example diagram of a detection process of a wireless network according to the existing solution.

The detection process in a radio link setup process may also be referred to as a scanning process. Specifically, in the wireless network, a terminal device discovers and detects signal strength of a surrounding access device, and the terminal device selects an access device based on signal strength of each access device to initiate an access process. For example, the terminal device 113 shown in FIG. 1 selects an access device from the first access device 101, the second access device 102, and the third access device 103 to initiate an access process. This ensures that the terminal device 113 can communicate with an accessed access device.

Step 201: The terminal device sends a probe request frame.

To detect access devices in the wireless network, the terminal device broadcasts a probe request frame (Probe request frame) to each surrounding access device. A frame header of the probe request frame broadcast by the terminal device carries a destination address (destination address, DA), a source address (source address, SA), and a target BSSID. The SA is a media access control address (media access control address, MAC) of the terminal device. In a case of networking with a same BSSID, all the access devices have a same DA and BSSID. For example, in the example shown in FIG. 1, the first access device 101, the second access device 102, and the third access device 103 can all receive the probe request frame from the terminal device.

Step 202: A first access device sends a first probe response frame to the terminal device.

Step 203: A second access device sends a second probe response frame to the terminal device.

Step 204: A third access device sends a third probe response frame to the terminal device.

In the wireless network, each access device that successfully receives the probe request frame from the terminal device can send a probe response frame (Probe Response Frame) to the terminal device. For example, in the example shown in FIG. 1, when successfully receiving the probe request frame, the first access device 101 sends a first probe response frame to the terminal device 113. Similarly, when successfully receiving the second probe request frame, the second access device 102 sends a second probe response frame to the terminal device 113. When successfully receiving the third probe request frame, the third access device 103 sends a third probe response frame to the terminal device 113. Because the wireless network described in this example is in networking with a same BSSID, all frame headers of the first probe response frame, the second probe response frame, and the third probe response frame have a same DA, SA, and target BSSID.

In addition, after the first access device receives the probe request frame, the first access device measures a first received signal strength indicator (received signal strength indicator, RSSI) between the first access device and the terminal device based on the probe request frame. The first RSSI reflects signal quality between the first access device and the terminal device, and a larger value of the first RSSI indicates better signal quality between the first access device and the terminal device. The first probe response frame sent by the first access device to the terminal device carries the first RSSI. Similarly, after the second access device receives the probe request frame, the second access device measures a second RSSI between the second access device and the terminal device based on the probe request frame, and the second probe response frame sent by the second access device to the terminal device carries the second RSSI. After the third access device receives the probe request frame, the third access device measures a third RSSI between the third access device and the terminal device based on the probe request frame, and the third probe response frame sent by the third access device to the terminal device carries the third RSSI.

Step 205: The terminal device accesses the second access device.

In this example, for example, the wireless network 100 is in networking with a same BSSID. In this case, all the access devices in the wireless network 100 have a same BSSID. After the terminal device sends the probe request frame to each access device, each access device in the wireless network 100 returns a probe response frame (the first probe response frame, the second probe response frame, and the third probe response frame described above) to the terminal device. When the terminal device receives the first probe response frame, the terminal device maintains a first correspondence based on the first probe response frame. Contents of the first correspondence are [BSSID of the first access device, first RSSI]. Descriptions of the contents of the first correspondence are not limited in this example. Similarly, the terminal device maintains a second correspondence based on the second probe response frame, and contents of the second correspondence are [BSSID of the second access device, second RSSI]. The terminal device maintains a third correspondence based on the third probe response frame, and contents of the third correspondence are [BSSID of the third access device, third RSSI]. For the correspondences, refer to Table 1.

**Table 1**

| | |
|---|---|
| Target BSSID | First RSSI |
| | Second RSSI |
| | Third RSSI |

In this example, because the wireless network 100 is in networking with a same BSSID, the BSSID of the first access device, the BSSID of the second access device, and the BSSID of the third access device are the same and all are the target BSSID. In this case, a list shown in Table 1 includes correspondences between the target BSSID and the first RSSI, between the target BSSID and the second RSSI, and between the target BSSID and the third RSSI.

The terminal device initiates an access process to an access device that sends a last probe response frame. For example, when the terminal device receives a plurality of probe response frames with a same BSSID, the terminal device initiates an access process to a target access device. The target access device is an access device that sends a target probe response frame to the terminal device, and the target probe response frame is a last probe response frame received within a timing duration of a timer preset by the terminal device. For example, the terminal device sequentially receives the first probe response frame, the third probe response frame, and the second probe response frame within the timing duration of the timer. In this case, the target probe response frame received last by the terminal device within the timing duration of the timer is the second probe response frame, and the target access device is the second access device. However, because a moment at which the terminal device receives the second probe response frame is later than a moment at which the terminal device receives the third probe response frame, it can be learned that in terms of a physical distance, a distance between the second access device and the terminal device is greater than a distance between the third access device and the terminal device. Similarly, because the moment at which the terminal device receives the third probe response frame is later than a moment at which the terminal device receives the first probe response frame, in terms of a physical distance, the distance between the third access device and the terminal device is greater than a distance between the first access device and the terminal device.

In addition, in this example, the first RSSI is a largest value in the plurality of RSSIs included in the list shown in Table 1, and the second RSSI is a smallest value in the plurality of RSSIs included in the list shown in Table 1. In this case, if the terminal device accesses the first access device, communication between the terminal device and the first access device can obtain optimal communication quality. If the terminal device accesses the second access device, communication between the terminal device and the second access device can obtain worst communication quality. However, because the terminal device uses the last received second probe response frame, the terminal device accesses the second access device with the smallest RSSI. Therefore, the access device accessed by the terminal device is not an access device with optimal signal strength in the wireless network, and communication quality of the terminal device cannot be ensured. In addition, if the second RSSI is very small, not only the communication quality of the terminal device is affected, but even the terminal device considers that signal strength of the current wireless network 100 is very poor, and attempts to access another unknown wireless network, causing a network security risk.

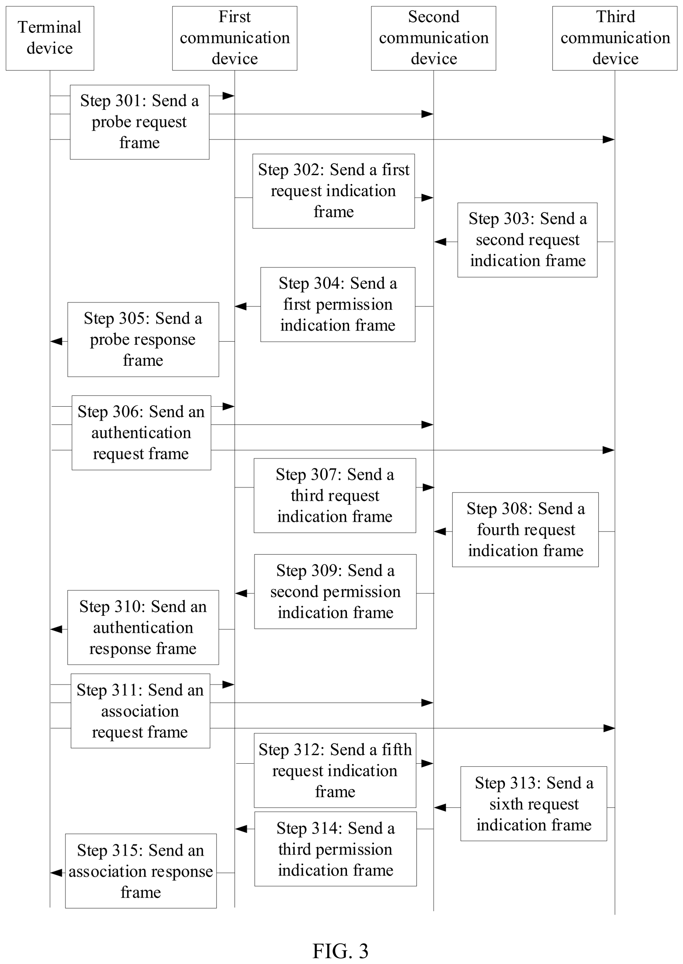

According to a wireless network access method shown in FIG. 3 according to this application, in a case of networking with a same BSSID, signal strength of an access device accessed by a terminal device can be ensured, thereby ensuring communication quality of the terminal device, and effectively preventing the terminal device from accessing an access device with low signal strength. FIG. 3 is a flowchart of steps of a first embodiment of a wireless network access method according to this application. For descriptions of a wireless network to which the method described in this embodiment is applied, refer to FIG. 1. Details are not described again. In addition, in this embodiment, for example, the wireless network is in networking with a same BSSID, that is, BSSIDs of communication devices included in the wireless network described in this embodiment are the same and all are a target BSSID.

Step 301: A terminal device sends a probe request frame.

For descriptions of an execution process of step 301 described in this embodiment, refer to the corresponding step 201 in FIG. 2. Details are not described again.

Step 302: A first communication device sends a first request indication frame to a second communication device.

Step 303: A third communication device sends a second request indication frame to the second communication device.

In this embodiment, for example, the first communication device, the second communication device, and the third communication device are three different access devices in the wireless network. In addition, the first communication device and the third communication device are both secondary access devices, and the secondary access devices are controlled by the second communication device serving as a primary access device. A quantity of secondary access devices is not limited in this embodiment. It may be understood that, because the method described in this embodiment is applied to networking with a same BSSID, a BSSID of the first communication device, a BSSID of the second communication device, and a BSSID of the third communication device are the same and all are the target BSSID.

In this embodiment, the first communication device can obtain a first RSSI based on the probe request frame from the terminal device, the second communication device can obtain a second RSSI based on the probe request frame from the terminal device, and the third communication device can obtain a third RSSI based on the probe request frame from the terminal device. For descriptions of obtaining the RSSIs by the communication devices based on the probe request frame, refer to the descriptions corresponding to FIG. 2. Details are not described again.

In this embodiment, when the first communication device, the second communication device, and the third communication device successfully receive the probe request frame from the terminal device, the first communication device, the second communication device, and the third communication device do not first return a probe response frame to the terminal device. Instead, the first communication device serving as a secondary access device sends the first request indication frame to the second communication device serving as a primary access device. The third communication device serving as a secondary access device sends the second request indication frame to the second communication device serving as a primary access device. The first request indication frame is used to request the second communication device to indicate whether the first communication device has permission to send an access message to the terminal device. Similarly, the second request indication frame is used to request the second communication device to indicate whether the third communication device has permission to send an access message to the terminal device. The first communication device is used as an example. The terminal device sends the probe request frame to request an access message from an access device, and the access message includes a probe response frame. It may be understood that, in this embodiment, when the secondary access device receives the probe request frame from the terminal device, the secondary access device does not send a probe response frame to the terminal device, but sends a request indication frame to the primary access device.

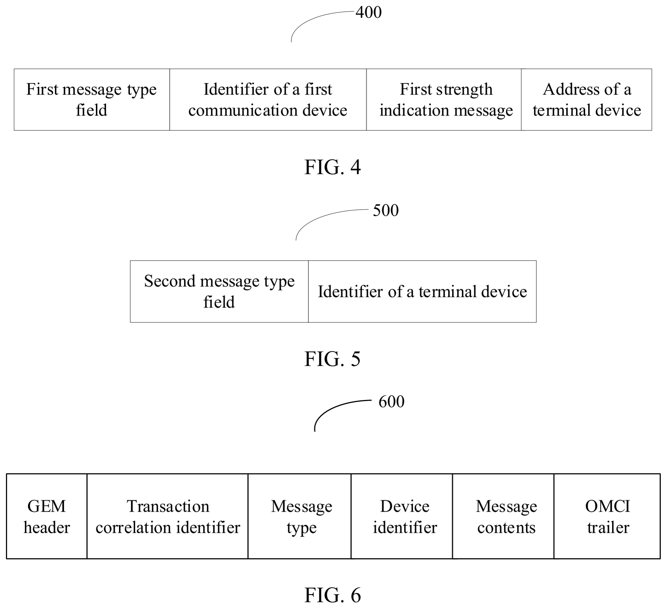

For a frame structure of the first request indication frame, refer to FIG. 4. FIG. 4 is an example diagram of a first frame structure of a request indication frame according to this application. The first request indication frame 400 includes a first message type field, an identifier of the first communication device, a first strength indication message, and an address of the terminal device.

The first message type field is used to indicate, to the second communication device, that the first request indication frame 400 is used to request, from the second communication device, permission to send a probe response frame to the terminal device. The identifier of the first communication device is unique in the wireless network. For example, if the first communication device is an optical network unit, the identifier of the first communication device may be an optical network unit identifier (optical network unit identifier, ONU ID). For another example, the identifier of the first communication device may alternatively be a private negotiated identifier. This is not specifically limited in this embodiment. The first strength indication message indicates signal strength between the first communication device and the terminal device. For example, the first strength indication message may be the first RSSI. In this embodiment, the first strength indication message is not limited. For example, the first strength indication message may alternatively be a received channel power indicator (received channel power indicator, RCPI), channel quality, a transmission rate, reference signal received power (reference signal received power, RSRP), reference signal received quality (reference signal received quality, RSRQ), or a signal to interference plus noise ratio (signal to interference plus noise ratio, SINR). The probe request frame received by the first communication device from the terminal device carries the address of the terminal device, and the first communication device puts the address of the terminal device into the first request indication frame 400. In this embodiment, for example, the first communication device obtains the address of the terminal device from the probe request frame. In another example, the terminal device may alternatively broadcast the address of the terminal device to the access devices. The first request indication frame 400 described in this embodiment may further carry a length indication message for indicating a length of the first request indication frame 400, and the like. This is not specifically limited. For descriptions of a frame structure of the second request indication frame, refer to the descriptions of the frame structure of the first request indication frame. Details are not described again.

For example, the probe request frame may carry the target BSSID, to indicate that a BSSID of a communication device that the terminal device expects to access is the target BSSID. In this case, the first communication device sends the first request indication frame to the second communication device only when the first communication device determines that the BSSID carried in the probe request frame is the same as the BSSID of the first communication device and both are the target BSSID. If the probe request frame does not carry a BSSID, it indicates that the terminal device requests to obtain BSSIDs of all surrounding communication devices. In this case, the first communication device directly sends the first request indication frame to the second communication device. In this embodiment, for descriptions of sending the second request indication frame by the third communication device to the second communication device, refer to the descriptions of sending the first request indication frame by the first communication device to the second communication device. Details are not described again.

Step 304: The second communication device sends a first permission indication frame to the first communication device.

In this embodiment, after receiving the first request indication frame from the first communication device and the second request indication frame from the third communication device, the second communication device serving as a primary access device determines, in the first communication device, the second communication device, and the third communication device, a communication device that has permission to send a probe response frame to the terminal device.

Specifically, the second communication device maintains, based on the first request indication frame and the second request indication frame, a permission list shown in Table 2.

**Table 2**

| Address of a terminal device | Identifier of a communication device | RSSI |
|---|---|---|
| STA-A1 | ID1 | First RSSI |
| | ID2 | Second RSSI |
| | ID3 | Third RSSI |

The second communication device can establish, based on the address (for example, STA-A1) of the terminal device, the identifier (for example, ID1) of the first communication device, and the first strength indication message (for example, the first RSSI) that are carried in the first request indication frame, a correspondence shown in Table 2 between the address (STA-A1) of the terminal device, the identifier (ID1) of the first communication device, and the first strength indication message (for example, the first RSSI). Similarly, the second communication device can establish a correspondence between the address (STA-A1) of the terminal device, an identifier (ID3) of the third communication device, and a third strength indication message (the third RSSI) based on the second request indication frame. The third RSSI is an RSSI between the third communication device and the terminal device. For specific descriptions, refer to the descriptions of the first RSSI between the first communication device and the terminal device. Details are not described again.

Optionally, in this embodiment, the terminal device may also access the second communication device serving as a primary access device. In this case, the second communication device may receive the probe request frame from the terminal device, and establish a correspondence shown in Table 2 between the address (STA-A1) of the terminal devices, an identifier (ID2) of the second communication devices, and the second RSSI based on the probe request frame. The second RSSI is an RSSI between the second communication device and the terminal device. For specific descriptions, refer to the descriptions of the first RSSI between the first communication device and the terminal device. Details are not described again.

Based on the permission list shown in Table 2, identifiers (ID1, ID2, and ID3) of communication devices that can be accessed by a terminal device having an address STA-A1 in the wireless network can be learned, as well as an RSSI (the first RSSI, the second RSSI, and the third RSSI) between the terminal device and each communication device that can be accessed.

The second communication device obtains a largest value of the RSSIs in the permission list. For example, when the second communication device determines that the first RSSI is greater than the second RSSI, and the first RSSI is greater than the third RSSI, it indicates that the signal strength between the terminal device and the first communication device is greater than signal strength between the terminal device and the second communication device, and the signal strength between the terminal device and the first communication device is greater than signal strength between the terminal device and the third communication device. To enable the terminal device to access the first communication device, the second communication device sends the first permission indication frame to the first communication device. The first permission indication frame indicates that the first communication device has permission to send a probe response frame to the terminal device.

The third communication device does not receive a permission indication frame from the second communication device. Therefore, the third communication device does not send a probe response frame to the terminal device. Similarly, the second communication device determines that the second RSSI is not the largest value in the plurality of RSSIs included in the permission list. Therefore, the second communication device does not send a probe response frame to the terminal device, either.

In this embodiment, for example, the terminal device accesses the first communication device. In another example, the terminal device may alternatively access the second communication device. For example, the second communication device determines that the second RSSI is a largest value in the permission list, and the second communication device determines that the second communication device has permission to send a probe response frame to the terminal device. In this case, the second communication device does not send a permission indication frame to the first communication device or the third communication device, but sends a probe response frame to the terminal device. Similarly, the terminal device may alternatively access the third communication device. For example, the second communication device determines that the third RSSI is a largest value in the permission list, and the second communication device sends, to the third communication device, a permission indication frame indicating to send a probe response frame to the terminal device.

For a frame structure of the first permission indication frame described in this embodiment, refer to FIG. 5. FIG. 5 is an example diagram of a frame structure of a permission indication frame according to this application. The first permission indication frame 500 includes a second message type field and an identifier of the terminal device. The second message type field is used to indicate, to the first communication device, that the first communication device has permission to send a probe response frame to the terminal device. For example, the first communication device parses the first permission indication frame 500 based on the second message type field carried in the first permission indication frame 500 to obtain the identifier of the terminal device. The first communication device may learn, based on the identifier of the terminal device, that the address of the terminal device is STA-A1. In this case, the first communication device sends a probe response frame to the terminal device whose address is STA-A1, so that the terminal device can detect the first communication device based on the probe response frame. In this embodiment, the first communication device pre-establishes a correspondence between the identifier of the terminal device and the address of the terminal device. Therefore, when the first communication device receives the identifier of the terminal device from the first permission indication frame 500, the first communication device may obtain the address of the terminal device corresponding to the identifier of the terminal device. Optionally, the first permission indication frame 500 may alternatively directly carry the address of the terminal device. The first permission indication frame 500 described in this embodiment may further carry a frame length indication message for indicating a length of the first permission indication frame 500, a response frame contents field for carrying any message, and the like. This is not specifically limited.

The first request indication frame 400 and the first permission indication frame 500 described in this embodiment may be carried by a physical layer operation, administration and maintenance (physical layer operation, administration and maintenance, PLOAM) frame in a passive optical network (passive optical network, PON) protocol, or may be carried by an optical network unit management and control interface (ONU management and control interface, OMCI) frame. Refer to FIG. 6. For example, the first request indication frame 400 and the first permission indication frame 500 are carried by the OMCI frame. FIG. 6 is an example diagram of a frame structure of an OMCI frame according to this application.

The OMCI frame 600 described in this example includes a gigabit passive optical network encapsulation mode (G-PON encapsulation mode, GEM) header (Header), a transaction correlation identifier (Transaction Correlation Identifier) field for indicating a priority of the OMCI frame 600, a message type (Message Type) field, a device identifier (Device Identifier) field, a message contents (Message Contents) field, and an OMCI trailer (Trailer) field. In this embodiment, if the OMCI frame 600 is used as the first request indication frame 400, a value of the message type field of the OMCI frame 600 is a first preset value and is used as the first message type field, and the message contents field is used to carry the identifier of the first communication device, the first strength indication message, and the address of the terminal device in the first request indication frame 400. If the OMCI frame 600 is used as the first permission indication frame 500, a value of the message type field of the OMCI frame 600 is a second preset value and is used as the second message type field, and the message contents field is used to carry the identifier (STA ID) of the terminal device.

Step 305: The first communication device sends a probe response frame to the terminal device.

In this embodiment, when the first communication device receives the first permission indication frame from the second communication device, the first communication device determines, based on the first permission indication frame, that the first communication device has permission to send a probe response frame to the terminal device. Therefore, the first communication device sends the probe response frame to the terminal device based on the first permission indication frame. The probe response frame described in this embodiment carries the target BSSID, so that the terminal device determines to access an access device having the target BSSID. In this embodiment, because the third communication device does not receive a permission indication frame from the second communication device, even though the third communication device receives the probe request frame from the terminal device, the third communication device still does not send a probe response frame to the terminal device, so that the terminal device does not access the third communication device. Similarly, because the second communication device serving as a primary access device determines that the second RSSI is not a largest value of the RSSIs between the terminal device and the communication devices in the wireless network, even though the second communication device receives the probe request frame from the terminal device, the second communication device still does not send a probe response frame to the terminal device, so that the terminal device does not access the second communication device.

It may be understood that the terminal device detects the first communication device based on the probe response frame. Specifically, in the wireless network, only the first communication device has permission to send a probe response frame to the terminal device. Therefore, the terminal device can detect the first communication device based on the probe response frame received from the first communication device. For example, the wireless network is in networking with a same BSSID. In this case, in a plurality of communication devices included in the wireless network, only a specific communication device (for example, the first communication device described above) sends a probe response frame to the terminal device. In the wireless network, only the first communication device has permission to send a probe response frame to the terminal device, so that the first communication device detected by the terminal device based on the probe response frame is a communication device with a largest RSSI to the terminal device in the wireless network. This ensures communication quality between the terminal device and the detected first communication device, and avoids a disadvantage that the terminal device accesses another unknown wireless network due to an excessively low RSSI detected by the terminal device, thereby improving network security.

Step 306: The terminal device sends an authentication request frame.

After initiating a detection process by sending the probe request frame, the terminal device enters a link authentication process. The link authentication process is performed to verify whether the terminal device is an authorized device, thereby preventing an unauthorized or malicious terminal device from accessing a communication device and threatening network security.

In the link authentication process, a communication device may verify, in two manners, whether the terminal device is an authorized device: open system authentication (Open System Authentication) and shared key authentication (Shared). The open system authentication is an authentication manner in which an identity of the terminal device is not authenticated. In principle, the terminal device may send an authentication request frame to the communication device, to obtain an authentication response frame from the communication device and get authenticated. The authentication request frame is merely a request, and does not include information such as a user name or a password. The shared key authentication is determining whether a peer end has a same key to determine whether an identity of the peer end is authorized. The key is shared between the communication devices and the terminal device in the wireless network, and therefore is referred to as a "shared" key. An encryption method corresponding to the key is wired equivalent privacy (wired equivalent privacy, WEP), which is used to prevent an unauthorized terminal from eavesdropping on or intruding into the wireless network. In this embodiment, for example, the link authentication process is performed through open system authentication. This is not specifically limited.

A frame header of the authentication request frame broadcast by the terminal device carries a DA, an SA, and the target BSSID. In addition, in a case of networking with a same BSSID, the communication devices can all receive the authentication request frame from the terminal device. For descriptions of receiving the authentication request frame from the terminal device by the communication devices, refer to the descriptions of receiving the probe request frame from the terminal device by the communication devices in step 301. Details are not described again.

Step 307: The first communication device sends a third request indication frame to the second communication device.

Step 308: The third communication device sends a fourth request indication frame to the second communication device.

In this embodiment, the first communication device can obtain a first RSSI based on the authentication request frame from the terminal device, the second communication device can obtain a second RSSI based on the authentication request frame from the terminal device, and the third communication device can obtain a third RSSI based on the authentication request frame from the terminal device. For descriptions of obtaining the RSSIs by the communication devices based on the authentication request frame, refer to step 302 and step 303. Details are not described again.

In this embodiment, when the first communication device, the second communication device, and the third communication device successfully receive the authentication request frame from the terminal device, the first communication device, the second communication device, and the third communication device do not first return an authentication response frame to the terminal device. Instead, the first communication device serving as a secondary access device sends the third request indication frame to the second communication device serving as a primary access device. The third communication device serving as a secondary access device sends the fourth request indication frame to the second communication device serving as a primary access device. The third request indication frame is used to request the second communication device to indicate whether the first communication device has permission to send an access message to the terminal device. Similarly, the fourth request indication frame is used to request the second communication device to indicate whether the third communication device has permission to send an access message to the terminal device. When the terminal device has sent the authentication request frame, the access message includes an authentication response frame. It may be understood that, in this embodiment, when the secondary access device receives the authentication request frame from the terminal device, the secondary access device does not send an authentication response frame to the terminal device, but sends a request indication frame to the primary access device. For descriptions of frame structures of the third request indication frame and the fourth request indication frame, refer to the descriptions of FIG. 4. Details are not described again.

Step 309: The second communication device sends a second permission indication frame to the first communication device.

In this embodiment, after receiving the third request indication frame from the first communication device and the fourth request indication frame from the third communication device, the second communication device serving as a primary access device determines, in the first communication device, the second communication device, and the third communication device, a communication device that has permission to send an authentication response frame to the terminal device. In this embodiment, for example, the second communication device determines that the first communication device has permission to send an authentication response frame to the terminal device. For a determining process, refer to the process in which the second communication device determines that the first communication device has permission to send a probe response frame to the terminal device in step 304. Details are not described again.

Step 310: The first communication device sends an authentication response frame to the terminal device.

In this embodiment, when the first communication device receives the second permission indication frame from the second communication device, the first communication device determines, based on the authentication request frame, that the first communication device has permission to send an authentication response frame to the terminal device. Therefore, the first communication device sends the authentication response frame to the terminal device based on the second permission indication frame. The authentication response frame described in this embodiment carries the target BSSID, so that the terminal device determines that link authentication between the terminal device and the first communication device succeeds. In this embodiment, because the third communication device does not receive a permission indication frame from the second communication device, even though the third communication device receives the authentication request frame from the terminal device, the third communication device still does not send an authentication response frame to the terminal device, so that the terminal device does not perform link authentication between the terminal device and the third communication device. Similarly, because the second communication device serving as a primary access device determines that the second RSSI is not a largest value of the RSSIs between the terminal device and the communication devices in the wireless network, even though the second communication device receives the authentication request frame from the terminal device, the second communication device still does not send an authentication response frame to the terminal device, so that the terminal device does not perform link authentication between the terminal device and the second communication device.

In the existing solution, in a case of networking with a same BSSID, a terminal device sends an authentication request frame to a plurality of access devices having a same BSSID, and the plurality of access devices all send an authentication response frame to the terminal device. In this case, the terminal device receives an authentication response frame with a low RSSI from an access device at a long distance, thereby triggering an abnormal behavior of the terminal device. For example, if the RSSI carried in the authentication response frame received by the terminal device is low, the terminal device considers that signal strength of a current detected network is poor, and the terminal device sends a deauthentication frame (Deauthentication Frame) to trigger deauthentication between the terminal device and the access device. Consequently, the terminal device fails in link authentication, and the terminal device cannot successfully access the access device.

In this embodiment, in the wireless network, only the first communication device has permission to send an authentication response frame to the terminal device. Therefore, in the wireless network, in the plurality of communication devices having the same BSSID, only link authentication between the first communication device and the terminal device succeeds. In addition, the first communication device is a communication device that has a largest RSSI to the terminal device in the wireless network. This ensures that the terminal device can succeed in link authentication to a communication device with optimal communication quality, and avoids a disadvantage that the terminal device fails in link authentication due to link authentication between the terminal device and a communication device with an excessively low RSSI.

It should be noted that, when receiving the authentication request frame from the terminal device, a communication device serving as a secondary access device sends a permission indication frame to a communication device serving as a primary access device, to request the primary access device to determine whether the communication device has permission to send an authentication response frame to the terminal device. In another example, when receiving the authentication request frame from the terminal device, the communication device serving as a secondary access device may determine whether the communication device has received the first permission indication frame from the primary access device. If the communication device has received the first permission indication frame from the primary access device, the communication device has permission to send an authentication response frame to the terminal device.

Optionally, the first communication device may preset a timer, and a timing start point of the timer is a moment at which the first permission indication frame from the second communication device is received. If the first communication device receives the authentication request frame from the terminal device within a timing duration of the timer, the first communication device sends an authentication response frame to the terminal device, so that link authentication between the terminal device and the first communication device succeeds. If the authentication request frame is received from the terminal device beyond the timing duration of the timer of the first communication device, the first communication device sends the third request indication frame to the second communication device, to request the second communication device to determine whether the first communication device has permission to send an authentication response frame to the terminal device.

Step 311: The terminal device sends an association request frame.

After initiating the authentication process by sending the authentication request frame, the terminal device enters an association process. The association process enables the terminal device to successfully access a communication device for data exchange.

A frame header of the association request frame broadcast by the terminal device carries the DA, the SA, and the target BSSID. In addition, in a case of networking with a same BSSID, the communication devices can all receive the association request frame from the terminal device. For descriptions of receiving the association request frame from the terminal device by the communication devices, refer to the descriptions of receiving the probe request frame from the terminal device by the communication devices in step 301. Details are not described again.

Step 312: The first communication device sends a fifth request indication frame to the second communication device.

Step 313: The third communication device sends a sixth request indication frame to the second communication device.

In this embodiment, the first communication device can obtain a first RSSI based on the association request frame from the terminal device, the second communication device can obtain a second RSSI based on the association request frame from the terminal device, and the third communication device can obtain a third RSSI based on the association request frame from the terminal device. For descriptions of obtaining the RSSIs by the communication devices based on the association request frame, refer to step 302 and step 303. Details are not described again.

In this embodiment, when the first communication device, the second communication device, and the third communication device successfully receive the association request frame from the terminal device, the first communication device, the second communication device, and the third communication device do not first return an association response frame to the terminal device. Instead, the first communication device serving as a secondary access device sends the fifth request indication frame to the second communication device serving as a primary access device. The third communication device serving as a secondary access device sends the sixth request indication frame to the second communication device serving as a primary access device. The fifth request indication frame is used to request the second communication device to indicate whether the first communication device has permission to send an access message to the terminal device. Similarly, the sixth request indication frame is used to request the second communication device to indicate whether the third communication device has permission to send an access message to the terminal device. When the terminal device has sent the association request frame, the access message includes an association response frame. It may be understood that, in this embodiment, when the secondary access device receives the association request frame from the terminal device, the secondary access device does not send an association response frame to the terminal device, but sends a request indication frame to the primary access device. For descriptions of frame structures of the fifth request indication frame and the sixth request indication frame, refer to the descriptions of FIG. 4. Details are not described again.

Step 314: The second communication device sends a third permission indication frame to the first communication device.

In this embodiment, after receiving the fifth request indication frame from the first communication device and the sixth request indication frame from the third communication device, the second communication device serving as a primary access device determines, in the first communication device, the second communication device, and the third communication device, a communication device that has permission to send an association response frame to the terminal device. In this embodiment, for example, the second communication device determines that the first communication device has permission to send an association response frame to the terminal device. For a determining process, refer to the process in which the second communication device determines that the first communication device has permission to send a probe response frame to the terminal device in step 304. Details are not described again.

Step 315: The first communication device sends an association response frame to the terminal device.

In this embodiment, when the first communication device receives the third permission indication frame from the second communication device, the first communication device determines, based on the third permission indication frame, that the first communication device has permission to send an association response frame to the terminal device. Therefore, the first communication device sends the association response frame to the terminal device based on the third permission indication frame. The association response frame described in this embodiment carries the target BSSID, so that the terminal device accesses the first communication device and exchanges data with the first communication device. In this embodiment, because the third communication device does not receive a permission indication frame from the second communication device, even though the third communication device receives the association request frame from the terminal device, the third communication device still does not send an association response frame to the terminal device, so that the terminal device does not access the third communication device. Similarly, because the second communication device serving as a primary access device determines that the second RSSI is not a largest value of the RSSIs between the terminal device and the communication devices in the wireless network, even though the second communication device receives the association request frame from the terminal device, the second communication device still does not send an association response frame to the terminal device, so that the terminal device does not access the second communication device.

In the existing solution, in a case of networking with a same BSSID, a terminal device sends an association request frame to a plurality of access devices having a same BSSID, and the plurality of access devices all send an association response frame to the terminal device. In this case, the terminal device receives an association response frame with a low RSSI from an access device at a long distance, thereby triggering an abnormal behavior of the terminal device. For example, if the RSSI carried in the association response frame received by the terminal device is low, the terminal device considers that signal strength of a current network on which link authentication is performed is poor. In this case, the terminal device sends a disassociation frame (Disassociation Frame) to trigger disassociation between the terminal device and the access device. Consequently, the terminal device fails in association, and the terminal device cannot successfully access the access device.

In this embodiment, in the wireless network, only the first communication device has permission to send an association response frame to the terminal device. Therefore, in the wireless network, in the plurality of communication devices having the same BSSID, the terminal device is associated only with the first communication device. In addition, the first communication device is a communication device that has a largest RSSI to the terminal device in the wireless network. This ensures that the terminal device can successfully access a communication device with optimal communication quality, and avoids a disadvantage that the terminal device fails in association because the terminal device is associated with a communication device with an excessively low RSSI.

It should be noted that, when receiving the association request frame from the terminal device, a communication device serving as a secondary access device sends a permission indication frame to a communication device serving as a primary access device, to request the primary access device to determine whether the communication device has permission to send an association response frame to the terminal device. In another example, when receiving the authentication request frame from the terminal device, the communication device serving as a secondary access device may determine whether the communication device has received at least one of the first permission indication frame or the second permission indication frame from the primary access device. If the communication device has received at least one of the first permission indication frame or the second permission indication frame from the primary access device, the communication device has permission to send an association response frame to the terminal device.

Optionally, the first communication device may preset a timer, and a timing start point of the timer is a moment at which the second permission indication frame from the second communication device is received. If the first communication device receives the association request frame from the terminal device within a timing duration of the timer, the first communication device sends an association response frame to the terminal device, so that the terminal device successfully accesses the first communication device. If the association request frame is received from the terminal device beyond the timing duration of the timer of the first communication device, the first communication device sends the fifth request indication frame to the second communication device, to request the second communication device to determine whether the first communication device has permission to send an association response frame to the terminal device.

In this embodiment, for example, a communication device having permission to send a probe response frame to the terminal device, a communication device having permission to send an authentication response frame to the terminal device, and a communication device having permission to send an association response frame to the terminal device are all the first communication device. In another example, at least two different communication devices may respectively have the foregoing three types of permission. This is not specifically limited.

In a case of networking with a same BSSID, in each of the detection process, the link authentication procedure, and the association procedure, only one communication device in the wireless network has permission to communicate with the terminal device, so that the terminal device in the wireless network detects only one communication device, succeeds in link authentication to only one communication device, and is successfully associated with only one communication device. Therefore, the terminal device can successfully access one communication device, and the communication device accessed by the terminal device has highest signal strength to the terminal device in the wireless network. This ensures communication quality between the terminal device and the accessed communication device, and effectively prevents the terminal device from accessing a communication device with low signal strength.

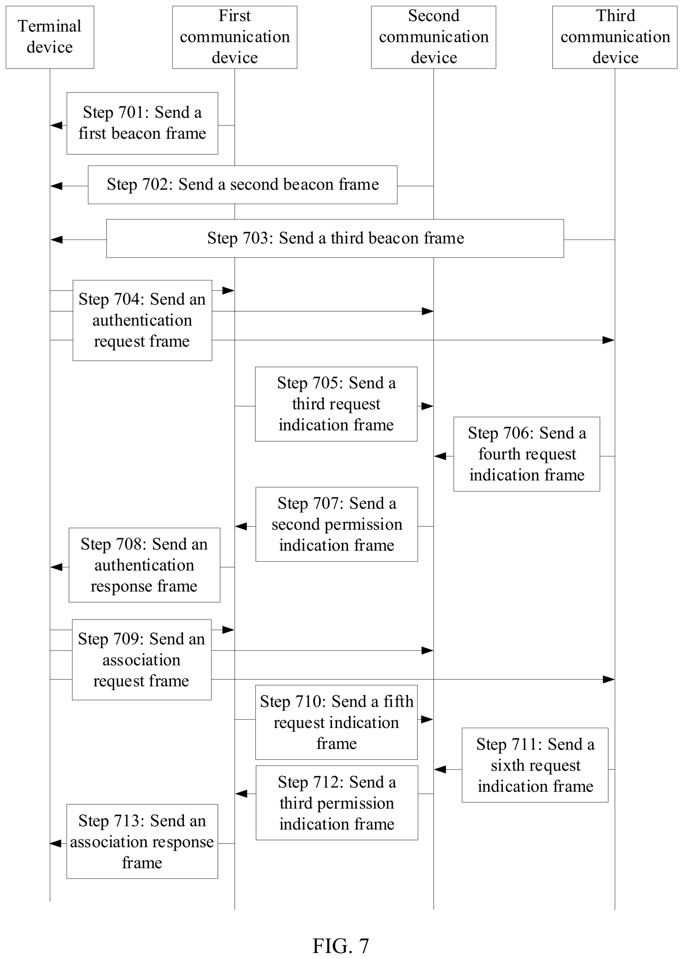

The detection procedure in the wireless network access method shown in FIG. 3 is active detection, that is, for example, the terminal device actively sends the probe request frame to the communication devices to implement detection. In an embodiment shown in FIG. 7, a detection procedure is passive detection. FIG. 7 is a flowchart of steps of a second embodiment of the wireless network access method according to this application. For descriptions of a wireless network to which the method described in this embodiment is applied, refer to FIG. 1. Details are not described again. In addition, in this embodiment, for example, the wireless network is in networking with a same BSSID, that is, BSSIDs of communication devices included in the wireless network described in this embodiment are the same and all are a target BSSID.

Step 701: A first communication device sends a first beacon frame to a terminal device.

Step 702: A second communication device sends a second beacon frame to the terminal device.

Step 703: A third communication device sends a third beacon frame to the terminal device.

For descriptions of the first communication device, the second communication device, and the third communication device in the wireless network, refer to the descriptions corresponding to FIG. 3. Details are not described again. To implement passive scanning, the terminal device listens to beacon frames (Beacon Frame) sent by communication devices in the wireless network. Each communication device that provides a wireless network service periodically sends a beacon frame to the terminal device, so that the terminal device accesses the wireless network in a passive scanning manner.

The first communication device is used as an example. The first communication device periodically sends the first beacon frame to the terminal device, and the first beacon frame carries the target BSSID of the first communication device. Specifically, the first communication device broadcasts one first beacon frame every 100 milliseconds (ms). The terminal device listens on each channel supported by the terminal device, to receive the first beacon frame. The first beacon frame described in this embodiment is used to indicate the terminal device to detect the first communication device. For descriptions of receiving the second beacon frame and the third beacon frame by the terminal device, refer to the descriptions of receiving the first beacon frame by the terminal device. Details are not described again.

A frame header of the beacon frame described in this embodiment carries the target BSSID. It may be understood that, in a case of networking with a same BSSID, BSSIDs of the beacon frames are the same and all are the target BSSID.

Step 704: The terminal device sends an authentication request frame.

In this embodiment, when the terminal device receives the first beacon frame, the second beacon frame, and the third beacon frame, the terminal device sends an authentication request frame, to enter a link authentication procedure. For example, the first communication device sends the first beacon frame to the terminal device, and the terminal device obtains a first RSSI based on the received first beacon frame, and sends the first RSSI to the first communication device by using the authentication request frame. For a process in which the terminal device sends a second RSSI and a third RSSI, refer to the process in which the terminal device sends the first RSSI. For descriptions of the first RSSI, the second RSSI, and the third RSSI, refer to corresponding step 304 in FIG. 3. Details are not described again.

The authentication request frame carries the target BSSID. Because the wireless network described in this embodiment is in networking with a same BSSID, the first communication device, the second communication device, and the third communication device can all receive the authentication request frame from the terminal device. For descriptions of a specific process, refer to corresponding step 306 in FIG. 3. Details are not described again.

Step 705: The first communication device sends a third request indication frame to the second communication device.

Step 706: The third communication device sends a fourth request indication frame to the second communication device.

Step 707: The second communication device sends a second permission indication frame to the first communication device.

Step 708: The first communication device sends an authentication response frame to the terminal device.

Step 709: The terminal device sends an association request frame.

Step 710: The first communication device sends a fifth request indication frame to the second communication device.

Step 711: The third communication device sends a sixth request indication frame to the second communication device.

Step 712: The second communication device sends a third permission indication frame to the first communication device.

Step 713: The first communication device sends an authentication response frame to the terminal device.

For descriptions of an execution process of step 705 to step 713 described in this embodiment, refer to the descriptions of the execution process of corresponding step 307 to step 315 in FIG. 3. Details are not described again.

In a case of networking with a same BSSID, in each of the link authentication procedure and the association procedure, only one communication device in the wireless network has permission to communicate with the terminal device, so that the terminal device in the wireless network succeeds in link authentication to only one communication device, and is successfully associated with only one communication device. Therefore, the terminal device can successfully access one communication device, and the communication device accessed by the terminal device has highest signal strength to the terminal device in the wireless network. This ensures communication quality between the terminal device and the accessed communication device, and effectively prevents the terminal device from accessing a communication device with low signal strength.

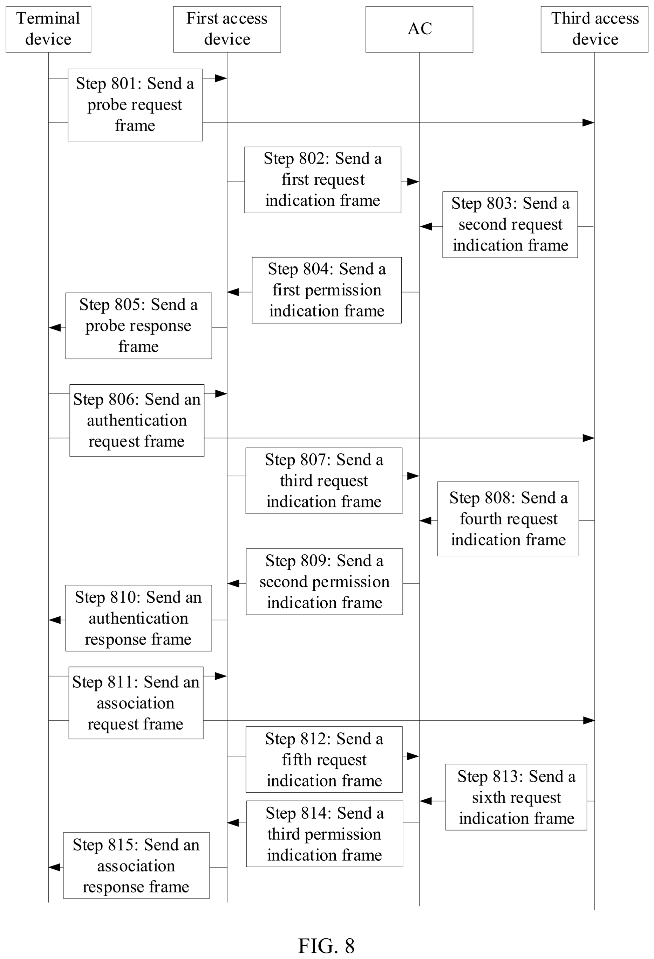

In the embodiments shown in FIG. 3 and FIG. 7, for example, the first communication device and the third communication device are secondary access devices, and the second communication device is a primary access device. In an embodiment shown in FIG. 8, a first communication device and a third communication device may be respectively the first access device and the third access device shown in FIG. 1, and a second communication device is the AC shown in FIG. 1. FIG. 8 is a flowchart of steps of a third embodiment of a wireless network access method according to this application.

Step 801: A terminal device sends a probe request frame.

To detect access devices in a wireless network, the terminal device broadcasts a probe request frame to each surrounding access device. In a case of networking with a same BSSID, all the access devices have a same BSSID. For example, in the example shown in FIG. 1, the first access device 101 and the third access device 103 can both receive the probe request frame from the terminal device. For specific descriptions of the probe request frame, refer to corresponding step 301 in FIG. 3. Details are not described again.

Step 802: The first access device sends a first request indication frame to the AC.

Step 803: The third access device sends a second request indication frame to the AC.

Because the method described in this embodiment is applied to networking with a same BSSID, a BSSID of the first access device and a BSSID of the third access device are the same and both are a target BSSID. The first access device can obtain a first RSSI based on the probe request frame from the terminal device, and the third access device can obtain a third RSSI based on the probe request frame from the terminal device. For a specific process, refer to the descriptions of corresponding step 302 in FIG. 3. Details are not described again.

In this embodiment, when the first access device and the third access device successfully receive the probe request frame from the terminal device, the first access device and the third access device do not first return a probe response frame to the terminal device, but first send the first request indication frame and the second request indication frame respectively to the AC. The first request indication frame is used to request the AC to indicate whether the first access device has permission to send a probe response frame to the terminal device. Similarly, the second request indication frame is used to request the AC to indicate whether the third access device has permission to send a probe response frame to the terminal device. It may be understood that, in this embodiment, when each access device receives the probe request frame from the terminal device, the access device does not send a probe response frame to the terminal device, but sends a request indication frame to the AC.

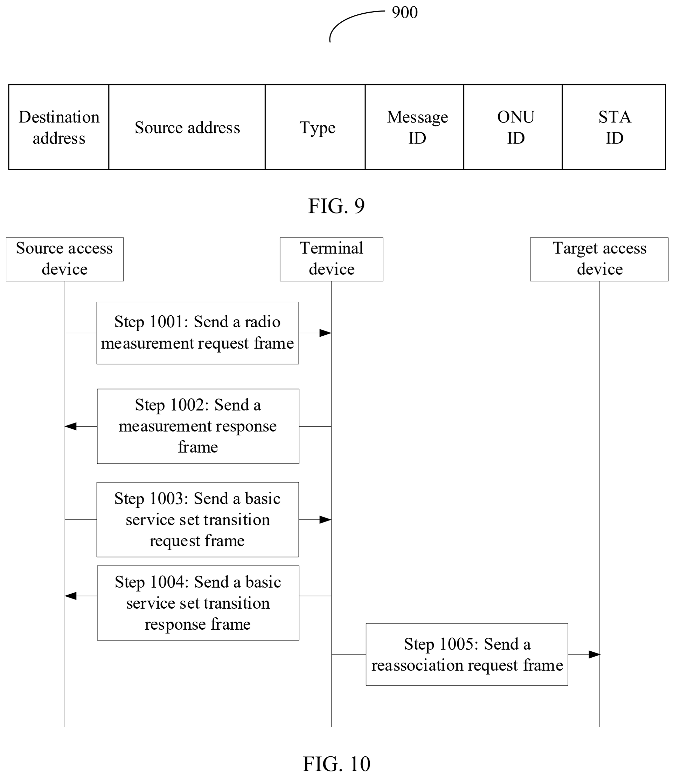

For a frame structure of the first request indication frame, refer to FIG. 9. FIG. 9 is an example diagram of a second frame structure of a request indication frame according to this application. The first request indication frame 900 is an Ethernet frame. The first request indication frame 900 includes a first message type field, an identifier of the first access device, a first strength indication message, and an identifier of the terminal device. Specifically, the first request indication frame 900 includes a destination address (Destination Address), a source address (Source Address), a type (Type), a message identifier (Message ID), an ONU identifier (ONU ID), and a STA ID. The type field is the first message type field, the ONU ID field is used to carry the identifier of the first access device, the STA ID field is used to carry the address of the terminal device, and any field of the first request frame 900 may be further used to carry the first strength indication message. For descriptions of the first message type field, the identifier of the first access device, the address of the terminal device, and the first strength indication message, refer to the descriptions corresponding to FIG. 4. Details are not described again.

In this embodiment, the AC and the first access device may be connected by using a category 5 cable or a category 6 cable, so that the first access device can successfully report the first request indication frame to the AC. The category 5 cable or the category 6 cable is a cable between the AC and the first access device, and complies with the 802.3 Ethernet protocol. For descriptions of a structure of the second request indication frame and descriptions of reporting the second request indication frame to the AC by the third access device, refer to the descriptions of the first request indication frame. Details are not described again.

Step 804: The AC sends a first permission indication frame to the first access device.

The first permission indication frame described in this embodiment is an Ethernet frame. For descriptions of a frame structure of the Ethernet frame, refer to FIG. 9. Details are not described again. For descriptions of obtaining the first permission indication frame by the AC, refer to corresponding step 304 in FIG. 3. Details are not described again.

Step 805: The first access device sends a probe response frame to the terminal device.

Step 806: The terminal device sends an authentication request frame.

For descriptions of an execution process of step 805 and step 806 described in this embodiment, refer to corresponding step 305 and step 306 in FIG. 3. Details are not described again.

Step 807: The first access device sends a third request indication frame to the AC.

Step 808: The third access device sends a fourth request indication frame to the AC.

The third request indication frame and the fourth request indication frame described in this embodiment are both Ethernet frames. For descriptions of a specific frame structure, refer to FIG. 9. Details are not described again. For descriptions of sending the third request indication frame to the AC by the first access device and sending the fourth request indication frame to the AC by the third access device in this embodiment, refer to corresponding step 807 and step 808 in FIG. 3. Specific execution processes are not described again.

Step 809: The AC sends a second permission indication frame to the first access device.

Step 810: The first access device sends an authentication response frame to the terminal device.

Step 811: The terminal device sends an association request frame.

Step 812: The first access device sends a fifth request indication frame to the AC.

Step 813: The third access device sends a sixth request indication frame to the AC.

The fifth request indication frame and the sixth request indication frame described in this embodiment are both Ethernet frames. For descriptions of a specific frame structure, refer to FIG. 9. Details are not described again. For descriptions of sending the fifth request indication frame to the AC by the first access device and sending the sixth request indication frame to the AC by the third access device in this embodiment, refer to corresponding step 812 and step 813 in FIG. 3. Specific execution processes are not described again.

Step 814: The AC sends a third permission indication frame to the first access device.

Step 815: The first access device sends an association response frame to the terminal device.

For descriptions of a specific execution process of step 814 and step 815 described in this embodiment, refer to corresponding step 314 and step 315 in FIG. 3. Details are not described again.

In a case of networking with a same BSSID, in each of a detection procedure, a link authentication procedure, and an association procedure, only one access device in the wireless network has permission to communicate with the terminal device, so that the terminal device in the wireless network detects only one access device, succeeds in link authentication to only one access device, and is successfully associated with only one access device. Therefore, the terminal device can successfully access one access device, and the access device accessed by the terminal device has highest signal strength to the terminal device in the wireless network. This ensures communication quality between the terminal device and the accessed access device, and effectively prevents the terminal device from accessing an access device with low signal strength.

In the embodiment shown in FIG. 8, the detection procedure may alternatively be passive detection. For a specific process of passive detection, refer to FIG. 7. Details are not described again.

When a wireless network includes a plurality of access devices, as provided in an existing solution, a terminal device can be transitioned from a source access device to a target access device. For example, in the example shown in FIG. 1, a source access device accessed by the terminal device 112 is the second access device 102, and a target access device to which the terminal device 112 is transitioned due to a roaming transition behavior is the first access device 101. For an execution process of the existing solution, refer to FIG. 10. FIG. 10 is a flowchart of an access method according to the existing solution.

Step 1001: A source access device sends a radio measurement request frame to a terminal device.

A wireless network described in this example includes a plurality of access devices, and the wireless network may be in networking with a same BSSID, or may be in networking with different BSSIDs. It may be understood that, the wireless network described in this example may support one or more basic service sets (Basic Service Set, BSS), each BSS includes one or more access devices, and different BSSs have different BSSIDs. When a terminal device moves in an environment, a roaming transition behavior is generated in expectation of transition from a source access device with low signal strength to an access device with high signal strength. After the source access device receives a data frame from the terminal device, the source access device can obtain an RSSI between the source access device and the terminal device based on the data frame. When the source access device determines that the RSSI is not greater than a roaming threshold, it indicates that the terminal device has moved to a location far from the source access device. To ensure communication quality of the terminal device, the terminal device needs to perform a roaming transition procedure. Therefore, the source access device sends a radio measurement request frame (Radio Measurement Request Frame) to the terminal device. The radio measurement request frame is used to request the terminal device to measure a received channel power indicator (received channel power indicator, RCPI) of each channel supported by the terminal device.

Step 1002: The terminal device sends a measurement response frame to the source access device.

The terminal device measures an RCPI of each BSS by using a broadcast or unicast request frame, and fills the RCPI in a measurement response frame (Radio Measurement Response Frame). Specifically, the measurement response frame includes a BSSID of each access device included in the wireless network and an RCPI corresponding to each BSSID.

Step 1003: The source access device sends a basic service set transition request frame to the terminal device.

After the source access device receives the measurement response frame from the terminal device, the source access device converts each RCPI in the measurement response frame into a corresponding RSSI. It may be understood that the source access device can obtain an RSSI corresponding to a BSSID of each access device in the wireless network. The source access device selects a target access device based on the RSSI. For example, the wireless network includes a first BSS and a second BSS, the first BSS has a first BSSID, and the second BSS has a second BSSID. The source access device obtains, based on the measurement response frame, a first RSSI corresponding to the first BSS and a second RSSI corresponding to the second BSS. When the source access device determines that the second RSSI is greater than the first RSSI, to ensure communication quality of a BSS accessed by the terminal device, the source access device determines that the terminal device needs to access the second BSS. Therefore, the source access device determines the second BSSID as a target BSSID, fills the target BSSID in a basic service set transition request frame (BSS Transition Request Frame), and sends the basic service set transition request frame to the terminal device.

A quantity of different BSSs included in the wireless network is not limited in this embodiment. If the wireless network includes two or more BSSs that have different BSSIDs, the source access device may preset a transition threshold, and if the source access device determines that an RSSI corresponding to a BSS is greater than the transition threshold, the source access device determines a BSSID of the BSS as a target BSSID.

Step 1004: The terminal device sends a basic service set transition response frame to the source access device.

The terminal device obtains the target access device based on the basic service set transition request frame. Specifically, the target access device is an access device in the second BSS. When the terminal device successfully obtains the target access device, the terminal device sends a basic service set transition response frame (BSS Transition Response Frame) to the source access device, to indicate, to the source access device, that the terminal device is to initiate a reassociation procedure to the target access device, so that the terminal device accesses the target access device based on the reassociation procedure. A status code (Status Code) carried in the basic service set transition response frame is 0.

Step 1005: The terminal device sends a reassociation request frame to the target access device.

To access the target access device, the terminal device sends a reassociation request frame (Reassociation Request Frame) to the target access device, to request to access the target access device.

However, a technical disadvantage of the existing method shown in FIG. 10 is that, when a location of a terminal device moves, so that the terminal device in a wireless network is transitioned from a source access device to a target access device, the terminal device receives a basic service set transition request frame from the source access device, and the basic service set transition request frame may trigger the terminal device to autonomously decide a target access device. Specifically, the terminal device detects a surrounding access device based on the basic service set transition request frame, and the terminal device autonomously decides and selects a target access device for access based on a probe response frame returned by the surrounding access device. However, a target access device selected by the source access device for the terminal device is usually inconsistent with the target access device autonomously decided and selected by the terminal device. As a result, the target access device finally accessed by the terminal device is not an access device with highest signal quality. Consequently, when the terminal device accesses the target access device autonomously decided by the terminal device, communication quality of the terminal device is reduced.

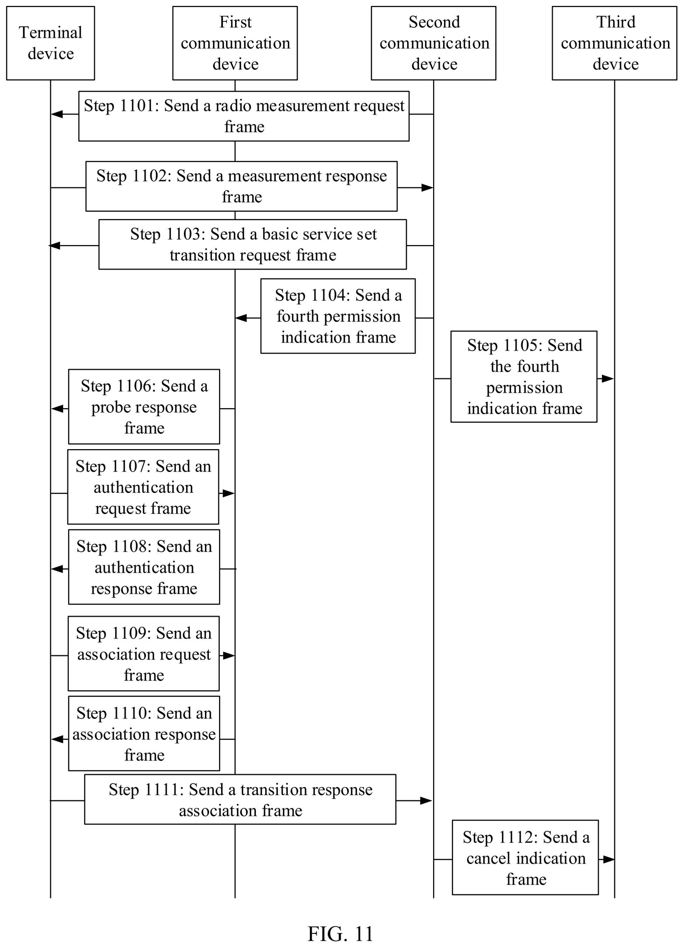

According to a wireless network access method provided in this application, signal quality of a target access device accessed by a terminal device that performs roaming transition can be ensured, thereby avoiding reduction of communication quality of the terminal device after the roaming transition due to low signal quality of the target access device accessed by the terminal device. For a specific execution process, refer to FIG. 11. FIG. 11 is a flowchart of steps of a fourth embodiment of a wireless network access method according to this application. According to the method described in this embodiment, a terminal device can be transitioned from a source access device to a target access device. For example, the source access device accessed by the terminal device is a second communication device, and the target access device to which the terminal device is transitioned due to a roaming transition behavior is a first communication device

Step 1101: The second communication device sends a radio measurement request frame to the terminal device.

Step 1102: The terminal device sends a measurement response frame to the second communication device.

Step 1103: The second communication device sends a basic service set transition request frame to the terminal device.

For descriptions of an execution process of step 1101 to step 1103 described in this embodiment, refer to corresponding step 1001 to step 1003 in FIG. 10. A specific execution process is not described again.

Step 1104: The second communication device sends a fourth permission indication frame to the first communication device.

Step 1105: The second communication device sends the fourth permission indication frame to a third communication device.

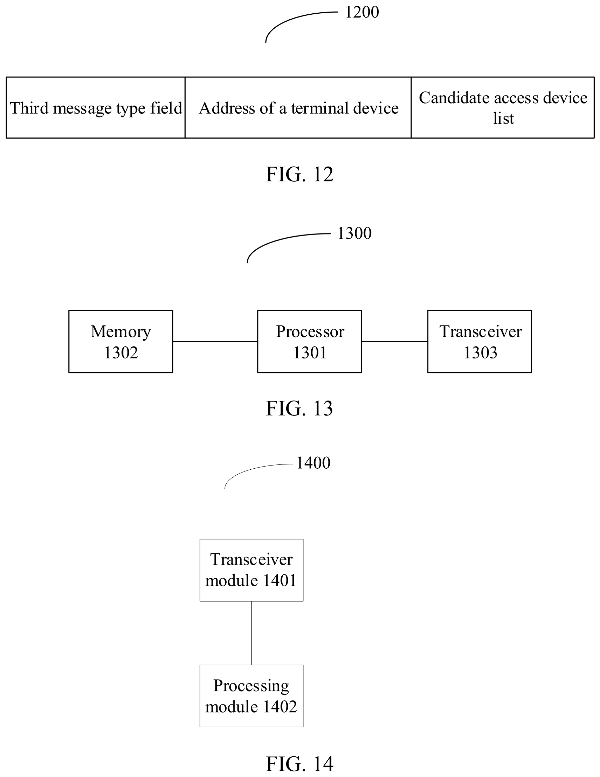

In this embodiment, the second communication device sends the fourth permission indication frame to any communication device (for example, the first communication device and the third communication device) other than the second communication device in a wireless network. For a frame structure of the fourth permission indication frame, refer to FIG. 12. FIG. 12 is an example diagram of another frame structure of a permission indication frame according to this application. The fourth permission indication frame 1200 includes a third message type field, an address of the terminal device, and a candidate access device list. The third message type field is used to indicate that the fourth permission indication frame indicates not to send, if a probe request frame sent by the terminal device in an autonomous decision process is received, a probe response frame to the terminal device based on the probe request frame, but to determine, based on the fourth permission indication frame 1200, whether the communication device is a target access device selected by the second communication device. For example, when the first communication device receives the fourth permission indication frame, the first communication device determines, based on an indication of the third message type field, not to send a probe response frame to the terminal device based on the probe request frame from the terminal device, but determines, based on the candidate access device list carried in the fourth permission indication frame 1200, whether to send a probe response frame to the terminal device. That is, the first communication device determines, based on the candidate access device list, whether the first communication device is the target access device selected by the second communication device. The fourth permission indication frame 1200 described in this embodiment may further include a frame type indication field for indicating a frame type, a frame length indication field for indicating a frame length, and the like. This is not specifically limited.

Specifically, the candidate access device list includes one or more target BSSIDs selected by the second communication device. For descriptions of selecting the one or more target BSSIDs by the second communication device, refer to the descriptions corresponding to FIG. 10. Details are not described again. The first communication device is still used as an example. The first communication device determines whether a BSSID of the first communication device is the same as the target BSSID included in the candidate access device list of the fourth permission indication frame. If the BSSID of the first communication device is the same as the target BSSID included in the candidate access device list of the fourth permission indication frame, the first communication device determines that the first communication device is the target access device selected by the second communication device. In this embodiment, for example, the BSSID of the first communication device is the same as the target BSSID included in the candidate access device list.

In this embodiment, for example, the second communication device sends the fourth permission indication frame to the first communication device and the third communication device. In another example, the second communication device may send an RSSI corresponding to each BSS to an AC, the AC obtains the fourth permission indication frame based on the RSSI, and the AC sends the fourth permission indication frame to the first communication device and the third communication device.

Step 1106: The first communication device sends a probe response frame to the terminal device.

In this embodiment, when the first communication device determines that the first communication device is the target access device selected by the second communication device, the first communication device has permission to send an access message to the terminal device. The access message includes the probe response frame. In this embodiment, the third communication device determines that a BSSID of the third communication device is different from the target BSSID included in the candidate access device list of the fourth permission indication frame. Therefore, the third communication device determines that the third communication device does not have permission to send a probe response frame to the terminal device. It may be understood that, even if the terminal device selects the third communication device through an autonomous decision, because the third communication device is not the target access device selected by the second communication device, the third communication device does not send a probe response frame to the terminal device. Therefore, the terminal device cannot detect the third communication device based on the autonomous decision, and the terminal device cannot access the third communication device. Because the first communication device is the target access device selected by the second communication device, the first communication device can send a probe response frame to the terminal device, so that the terminal device can access only the target access device selected by the second communication device based on signal strength. This ensures signal strength of the communication device accessed by the terminal device, and ensures communication quality between the terminal device and the detected first communication device.

The probe response frame described in this embodiment carries the target BSSID, so that the terminal device determines that a BSSID of a to-be-accessed communication device is the target BSSID.

Step 1107: The terminal device sends an authentication request frame to the first communication device.

Because the probe response frame received by the terminal device carries the target BSSID, the terminal device sends the authentication request frame to the first communication device based on the target BSSID.

Step 1108: The first communication device sends an authentication response frame to the terminal device.

Step 1109: The terminal device sends an association request frame to the first communication device.

Step 1110: The first communication device sends an association response frame to the terminal device.

For descriptions of a process in which the terminal device accesses the first communication device in step 1107 to step 1110 described in this embodiment, refer to the descriptions corresponding to FIG. 3. Details are not described again.

Step 1111: The terminal device sends a transition response association frame to the second communication device.

In this embodiment, when the terminal device has successfully accessed the first communication device, the terminal device sends a transition response association frame to the second communication device. The transition response association frame indicates that the terminal device has successfully accessed the first communication device. The transition response association frame described in this embodiment includes a fourth message type field, the address of the terminal device, and the target BSSID, and the fourth message type field is used to indicate that the terminal device has successfully accessed the first communication device having the target BSSID.

Step 1112: The second communication device sends a cancel indication frame to the third communication device.

The cancel indication frame described in this embodiment includes a fifth message type field and the address of the terminal device. The fifth message type field is used to indicate that the terminal device has successfully accessed the first communication device, and indicate the third communication device to cancel a state of not replying to the terminal device. It may be understood that, the cancel indication frame is used to ensure subsequent normal communication between the third communication device and the terminal device.

According to the method described in this embodiment, when the wireless network includes a plurality of BSSs, each access device determines, based on the candidate device list, whether the access device has permission to send an access message to the terminal device, so that the access device does not send an access message to the terminal device due to an autonomous decision of the terminal device. This ensures, in a case of a plurality of BSSs, signal quality of the target access device accessed by the terminal device that performs roaming transition, thereby avoiding reduction of communication quality of the terminal device after the roaming transition due to low signal quality of the target access device accessed by the terminal device.

An embodiment of this application provides a communication device. For a structure of the communication device, refer to FIG. 13. FIG. 13 is a schematic diagram of a structure of a first embodiment of a communication device according to this application.

The communication device 1300 described in this embodiment includes a processor 1301, a memory 1302, and a transceiver 1303. The processor 1301 is connected to the memory 1302 and the transceiver 1303. The processor 1301 may include at least one of an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, or a neural-network processing unit (neural-network processing unit, NPU). The transceiver 1303 receives an electromagnetic wave, performs frequency modulation and filtering processing on an electromagnetic wave signal, and sends a processed signal to the processor 1301. The transceiver 1303 may further receive a to-be-sent signal from the processor 1301, perform frequency modulation and amplification on the to-be-sent signal, and convert the to-be-sent signal into an electromagnetic wave for radiation. The memory 1302 stores program instructions.

If the communication device 1300 described in this embodiment is a first communication device serving as a secondary access device, the transceiver 1303 is configured to perform sending and receiving related steps performed by the first communication device in any one of the embodiments in FIG. 3, FIG. 7, FIG. 8, and FIG. 11. When the program instructions stored in the memory 1302 are executed by the processor 1301, the processor 1301 is enabled to perform processing related steps performed by the first communication device in any one of the embodiments in FIG. 3, FIG. 7, FIG. 8, and FIG. 11.

If the communication device 1300 described in this embodiment is a third communication device serving as a secondary access device, the transceiver 1303 is configured to perform sending and receiving related steps performed by the third communication device in any one of the embodiments in FIG. 3, FIG. 7, FIG. 8, and FIG. 11. When the program instructions stored in the memory 1302 are executed by the processor 1301, the processor 1301 is enabled to perform processing related steps performed by the third communication device in any one of the embodiments in FIG. 3, FIG. 7, FIG. 8, and FIG. 11.

If the communication device 1300 described in this embodiment is a second communication device serving as a primary access device, the transceiver 1303 is configured to perform sending and receiving related steps performed by the second communication device in any one of the embodiments in FIG. 3, FIG. 7, FIG. 8, and FIG. 11. When the program instructions stored in the memory 1302 are executed by the processor 1301, the processor 1301 is enabled to perform processing related steps performed by the second communication device in any one of the embodiments in FIG. 3, FIG. 7, FIG. 8, and FIG. 11.

An embodiment further provides a communication device shown in FIG. 14. FIG. 14 shows a structure of the communication device from a perspective of functional modules. FIG. 14 is an example diagram of a structure of a second embodiment of a communication device according to this application.

The communication device 1400 described in this embodiment includes a transceiver module 1401 and a processing module 1402 connected to the transceiver module 1401. If the communication device 1400 described in this embodiment is a first communication device serving as a secondary access device, the transceiver module 1401 is configured to perform sending and receiving related steps performed by the first communication device in any one of the embodiments in FIG. 3, FIG. 7, FIG. 8, and FIG. 11. The processing module 1402 is configured to perform processing related steps performed by the first communication device in any one of the embodiments in FIG. 3, FIG. 7, FIG. 8, and FIG. 11.

If the communication device 1400 described in this embodiment is a third communication device serving as a secondary access device, the transceiver module 1401 is configured to perform sending and receiving related steps performed by the third communication device in any one of the embodiments in FIG. 3, FIG. 7, FIG. 8, and FIG. 11. The processing module 1402 is configured to perform processing related steps performed by the third communication device in any one of the embodiments in FIG. 3, FIG. 7, FIG. 8, and FIG. 11.

If the communication device 1400 described in this embodiment is a second communication device serving as a primary access device, the transceiver module 1401 is configured to perform sending and receiving related steps performed by the second communication device in any one of the embodiments in FIG. 3, FIG. 7, FIG. 8, and FIG. 11. The processing module 1402 is configured to perform processing related steps performed by the second communication device in any one of the embodiments in FIG. 3, FIG. 7, FIG. 8, and FIG. 11.

An embodiment of this application further provides a wireless network. For descriptions of a structure of the wireless network, refer to FIG. 1. For a process of a wireless network access method performed by the wireless network, refer to any one of the embodiments in FIG. 3, FIG. 7, FIG. 8, and FIG. 11.

An embodiment of this application further provides a computer-readable storage medium. The computer storage medium stores a computer program, the computer program includes program instructions, and when the program instructions are executed by a processor, the processor is enabled to perform the method described in any one of the method embodiments in FIG. 3, FIG. 7, FIG. 8, and FIG. 11.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of technical solutions of embodiments of this application.

## Claims

1. A wireless network access method, wherein the method comprises:
receiving, by a first communication device, a permission indication frame from a second communication device, wherein the permission indication frame indicates that the first communication device has permission to send an access message to a terminal device, and the access message is used by the terminal device to access the first communication device; and
sending, by the first communication device, the access message to the terminal device based on the permission indication frame.

2. The method according to claim 1, wherein before the receiving, by a first communication device, a permission indication frame from a second communication device, the method further comprises:
sending, by the first communication device, a request indication frame to the second communication device, wherein the request indication frame carries a first strength indication message, an identifier of the first communication device, and an address of the terminal device, the first strength indication message indicates signal strength between the first communication device and the terminal device, and the first strength indication message is used by the second communication device to determine whether the first communication device has permission to send the access message to the terminal device.

3. The method according to claim 2, wherein the access message comprises a probe response frame, and the sending, by the first communication device, the access message to the terminal device based on the permission indication frame comprises:
sending, by the first communication device, the probe response frame to the terminal device based on the permission indication frame, wherein the probe response frame carries a basic service set identifier BSSID of the first communication device, and the probe response frame is used by the terminal device to successfully detect the first communication device.

4. The method according to claim 2 or 3, wherein before the sending, by the first communication device, a request indication frame to the second communication device, the method further comprises:
receiving, by the first communication device, a probe request frame from the terminal device, wherein the probe request frame is used by the terminal device to request to detect the first communication device; and
obtaining, by the first communication device, the request indication frame based on the probe request frame.

5. The method according to any one of claims 2 to 4, wherein the access message comprises an authentication response frame, and the sending, by the first communication device, the access message to the terminal device based on the permission indication frame comprises:
sending, by the first communication device, the authentication response frame to the terminal device based on the permission indication frame, wherein the authentication response frame carries the BSSID of the first communication device, and the authentication response frame indicates that the terminal device succeeds in link authentication.

6. The method according to claim 2 or 5, wherein before the sending, by the first communication device, a request indication frame to the second communication device, the method further comprises:
receiving, by the first communication device, an authentication request frame from the terminal device, wherein the authentication request frame is used to request to perform link authentication on the terminal device; and
obtaining, by the first communication device, the request indication frame based on the authentication request frame.

7. The method according to any one of claims 2 to 6, wherein the access message comprises an association response frame, and the sending, by the first communication device, the access message to the terminal device based on the permission indication frame comprises:
sending, by the first communication device, the association response frame to the terminal device based on the permission indication frame, wherein the association response frame carries the BSSID of the first communication device, and the association response frame indicates that the terminal device has been successfully associated with the first communication device.

8. The method according to claim 2 or 7, wherein before the sending, by the first communication device, a request indication frame to the second communication device, the method further comprises:
receiving, by the first communication device, an association request frame from the terminal device, wherein the association request frame is used by the terminal device to request to be associated with the first communication device; and
obtaining, by the first communication device, the request indication frame based on the association request frame.

9. The method according to any one of claims 1 to 8, wherein the permission indication frame comprises a correspondence between the address of the terminal device and a target BSSID, and the sending, by the first communication device, the access message to the terminal device based on the permission indication frame comprises:
if the first communication device determines that the BSSID of the first communication device is the same as the target BSSID, sending, by the first communication device, the access message to the terminal device based on the address of the terminal device.

10. A wireless network access method, wherein the method comprises:
obtaining, by a second communication device, a first strength indication message, wherein the first strength indication message indicates signal strength between a first communication device and a terminal device; and
sending, by the second communication device, a permission indication frame to the first communication device based on the first strength indication message, wherein the permission indication frame indicates that the first communication device has permission to send an access message to the terminal device, and the access message is used by the terminal device to access the first communication device.

11. The method according to claim 10, wherein the sending, by the second communication device, a permission indication frame to the first communication device based on the first strength indication message comprises:
obtaining, by the second communication device, a third strength indication message, wherein the third strength indication message indicates signal strength between a third communication device and the terminal device; and
determining, by the second communication device, that the signal strength indicated by the first strength indication message is greater than the signal strength indicated by the third strength indication message.

12. The method according to claim 10 or 11, wherein the obtaining, by a second communication device, a first strength indication message comprises:
receiving, by the second communication device, a request indication frame from the first communication device, wherein the request indication frame carries the first strength indication message, an identifier of the first communication device, and an address of the terminal device.

13. The method according to claim 10 or 11, wherein the obtaining, by a second communication device, a first strength indication message comprises:
receiving, by the second communication device, a measurement response frame from the terminal device, wherein the measurement response frame is used to obtain the first strength indication message.

14. The method according to claim 13, wherein the permission indication frame comprises a correspondence between an address of the terminal device and a target basic service set identifier BSSID, and the target BSSID is used to indicate that the first communication device having the target BSSID has permission to send the access message to the terminal device.

15. A wireless network access method, wherein the method comprises:
obtaining, by a second communication device, a first strength indication message and a second strength indication message, wherein the first strength indication message indicates signal strength between a first communication device and a terminal device, and the second strength indication message indicates signal strength between the second communication device and the terminal device; and
determining, by the second communication device, that the signal strength indicated by the second strength indication message is greater than the signal strength indicated by the first strength indication message, and sending an access message to the terminal device, wherein the access message is used by the terminal device to access the second communication device.

16. The method according to claim 15, wherein the obtaining, by a second communication device, a first strength indication message comprises:
receiving, by the second communication device, a request indication frame from the first communication device, wherein the request indication frame carries the first strength indication message, an identifier of the first communication device, and an address of the terminal device.

17. The method according to claim 15, wherein the obtaining, by a second communication device, a first strength indication message and a second strength indication message comprises:
receiving, by the second communication device, a measurement response frame from the terminal device, wherein the measurement response frame is used to obtain the first strength indication message and the second strength indication message.

18. A wireless network access method, wherein the method comprises:
obtaining, by a second communication device, a first strength indication message, wherein the first strength indication message indicates signal strength between a first communication device and a terminal device;
sending, by the second communication device, a permission indication frame to the first communication device based on the first strength indication message, wherein the permission indication frame indicates that the first communication device has permission to send an access message to the terminal device, and the access message is used by the terminal device to access the first communication device; and
sending, by the first communication device, the access message to the terminal device.

19. A communication device, comprising a processor and a transceiver connected to the processor, wherein
the transceiver is configured to receive a permission indication frame from another communication device;
the processor is configured to determine, based on the permission indication frame, that the communication device has permission to send an access message to a terminal device, wherein the access message is used by the terminal device to access the communication device; and
the transceiver is further configured to send the access message to the terminal device.

20. A communication device, comprising a processor and a transceiver connected to the processor, wherein
the processor is configured to obtain a first strength indication message, wherein the first strength indication message indicates signal strength between another communication device and a terminal device; and
the transceiver is configured to send a permission indication frame to the another communication device based on the first strength indication message, wherein the permission indication frame indicates that the another communication device has permission to send an access message to the terminal device, and the access message is used by the terminal device to access the another communication device.

21. A communication device, comprising a processor and a transceiver connected to the processor, wherein
the processor is configured to:
obtain a first strength indication message and a second strength indication message, wherein the first strength indication message indicates signal strength between another communication device and a terminal device, and the second strength indication message indicates signal strength between the communication device and the terminal device; and
determine that the signal strength indicated by the second strength indication message is greater than the signal strength indicated by the first strength indication message; and
the transceiver is configured to send an access message to the terminal device, wherein the access message is used by the terminal device to access the communication device.

22. A wireless network, comprising a first communication device, a second communication device, and a terminal device, wherein
the second communication device is configured to obtain a first strength indication message, wherein the first strength indication message indicates signal strength between the first communication device and the terminal device;
the second communication device is configured to send a permission indication frame to the first communication device based on the first strength indication message, wherein the permission indication frame indicates that the first communication device has permission to send an access message to the terminal device, and the access message is used by the terminal device to access the first communication device; and
the first communication device is configured to send the access message to the terminal device.

23. A computer-readable storage medium, wherein the computer storage medium stores a computer program, the computer program comprises program instructions, and when the program instructions are executed by a processor, the processor is enabled to perform the method according to any one of claims 1 to 18.
